# FASCICULE DE BREVET EUROPEEN

(11) **EP 3 489 629 B1**
(45) Date de publication et mention de la délivrance du brevet: **18.08.2021**
(21) Numéro de dépôt: 18207321.3
(22) Date de dépôt: 20.11.2018
(51) Int. Cl.: G01D 5/353

(54) **DISPOSITIF DE CARTOGRAPHIE DE TEMPERATURE ET DE DEFORMATION D'UNE PAROI DE CRAYON DE COMBUSTIBLE NUCLEAIRE**
VORRICHTUNG ZUR KARTOGRAFISCHEN ERFASSUNG DER TEMPERATUR UND DEFORMATION EINER WAND EINES NUKLEAREN BRENNSTABS
ARRANGEMENT FOR MAPPING TEMPERATURE AND DEFORMATION OF A WALL OF A NUCLEAR FUEL PENCIL

(30) Priorité: 27.11.2017 FR 1761189
(43) Date de publication de la demande: 29.05.2019
(73) Titulaire: Commissariat à l'Energie Atomique et aux Energies Alternatives, 75015 Paris (FR)
(72) Inventeur: GAILLOT, Stéphane, 83560 VINON-SUR-VERDON (FR)
(74) Mandataire: Nony

(56) Documents cités:
- WO-A1-02/090893
- WO-A1-2013/150019
- FR-A1- 2 959 309
- US-A1- 2012 300 807

## Description

### Domaine technique

La présente invention concerne un crayon de combustible nucléaire comportant un dispositif de mesure optique de température et de déformation d'une structure, en particulier de sa dilatation dans le sens de la longueur.

L'application principale de l'invention est la surveillance d'un crayon de combustible nucléaire faisant l'objet d'essais dans un réacteur de recherche. Au cours de son utilisation, un crayon de combustible est sujet à un échauffement important qui implique un transfert thermique vers un fluide de refroidissement en circulation autour de la gaine du crayon. Il est par conséquent fondamental, lors d'essais en échauffement, de caractériser au mieux le comportement thermique et thermomécanique du crayon, notamment en termes de transferts thermiques et de déformations structurelles.

La mesure de la température externe de la gaine du crayon est dans ce cadre un paramètre déterminant pour la caractérisation des échanges thermiques entre le crayon et le fluide de refroidissement, ainsi que pour le comportement thermomécanique du crayon.

En outre, l'échauffement du crayon est susceptible de provoquer un gonflement et/ou un allongement de sa gaine.

Ainsi, l'invention proposée vise notamment à améliorer la détermination d'un profil, c'est-à-dire d'une cartographie de température et de la déformation d'une structure, notamment d'une paroi de crayon de combustible nucléaire, ainsi qu'à limiter les perturbations induites par la présence du dispositif.

### Etat de la technique

La mesure de la température de parois de crayons de combustible nucléaire dans un réacteur expérimental, afin de caractériser les comportements thermiques et thermomécaniques de ces derniers, est réalisée de façon usuelle au moyen de thermocouples mis en contact direct avec la paroi par l'intermédiaire d'un moyen de serrage adapté. Ce moyen de serrage peut consister en une ligature ou une soudure, ou encore en une structure porteuse, telle qu'une cage entourant la gaine du crayon.

L'utilisation de thermocouples entraîne dans la pratique un certain nombre d'inconvénients. Parmi ces derniers, il est à noter qu'une mesure réalisée par thermocouple est par nature ponctuelle. L'obtention d'un profil de température avec une résolution satisfaisante n'est donc pas garantie, le nombre de points de mesure pouvant être limité en particulier par l'espace disponible pour les thermocouples dans le dispositif. De plus, la réalisation d'un nombre de points de mesure important implique un coût relativement élevé en investissement et en main d'oeuvre.

En outre, dans le cas où le thermocouple est fixé par soudure sur la paroi, le flux thermique entre la gaine du crayon et le fluide de refroidissement peut être altéré par le point de soudure: ce dernier est en effet susceptible de créer un point froid faussant la mesure de la température de la paroi.

D'autre part, dans le cas d'un serrage des thermocouples sur la paroi par une structure porteuse, il existe un risque que l'écoulement du fluide de refroidissement soit perturbé notablement par la structure porteuse. Ce phénomène est lui aussi susceptible de fausser la mesure de température de la paroi.

Enfin, la transmission du signal émis par un thermocouple vers un dispositif d'acquisition du signal se fait par l'intermédiaire d'un câble électrique. Or il n'est pas exclu que le signal puisse être perturbé par un bruit électromagnétique, par exemple émis par des dispositifs de forte puissance tel qu'un dispositif de chauffage. Il est certes possible de mettre en œuvre un blindage électromagnétique, mais cela complique la réalisation du dispositif de mesure. En particulier, la réalisation d'un tel blindage peut être impossible si les contraintes géométriques, par exemple en termes d'espace disponible, ne la permettent pas.

La demande de brevet FR2996914 au nom de la Demanderesse divulgue une canne thermométrique comportant des thermocouples, le métal de la gaine de la canne étant utilisé comme l'un des deux métaux des thermocouples. Ce dispositif représente une amélioration significative par rapport à l'art antérieur, car il permet d'améliorer la densité des points de mesure (typiquement plusieurs points par centimètre linéaire), de ne pas perturber le flux thermique par la présence des thermocouples ou encore de récupérer aisément la canne afin de la réutiliser. Cependant, ce dispositif n'échappe pas aux inconvénients inhérents à l'utilisation de thermocouples, comme le risque de créer un point froid sur la paroi au niveau de la soudure ou le risque d'une perturbation du signal de mesure transmis par câble électrique.

Ainsi, l'utilisation de thermocouples pour la mesure de la température d'une paroi de crayon de combustible nucléaire n'est pas complètement satisfaisante. En outre, les thermocouples ne se prêtent pas à la mesure de la déformation d'une structure ou d'une paroi.

Il est par ailleurs connu dans plusieurs domaines, tels que le génie civil ou le nucléaire, d'utiliser des fibres optiques pour mesurer les déformations de structures ou pour contrôler une température. Les fibres optiques utilisées à cet effet sont appelées fibres à réseaux de Bragg (en anglais « *fiber Bragg grating »s* d'acronyme *FBG*). Ce type de fibres optiques se distingue par la présence en leur sein de sections dont l'indice de réfraction varie périodiquement. Cette variation périodique crée un réseau de Bragg dont l'effet est de réfléchir la lumière dans un certain domaine de longueur d'onde, et hors de ce domaine de la transmettre.

La période du réseau de Bragg détermine quelles longueurs d'onde sont réfléchies ou transmises. Or, l'allongement de la fibre, quelle que soit son origine (thermique ou mécanique), a pour conséquence un allongement de la période des réseaux de Bragg de la fibre. L'allongement de la fibre provoque donc une modification des longueurs d'onde transmises ou réfléchies par un réseau de Bragg dont la période est modifiée. De plus, une variation de température est également susceptible de provoquer une modification de l'indice de réfraction de la fibre.

Il est ainsi possible de tirer profit de ces phénomènes pour effectuer une mesure de température ou de déformation au moyen d'une fibre optique à réseau de Bragg : la mesure est alors basée sur l'analyse des longueurs d'onde réfléchies et/ou transmises par la fibre optique.

La demande de brevet JP 2012 088155 divulgue l'utilisation d'une unique fibre optique à réseau de Bragg pour mesurer simultanément la température et la déformation d'une structure. Pour ce faire, il est proposé d'effectuer chacune des deux mesures sur l'une de deux sections différenciées de la fibre optique. L'une des sections, servant à mesurer la température, n'est pas rigidement maintenue sur la structure et est donc libre de subir une variation de longueur consécutive à un changement de température. L'autre section, servant à mesurer la déformation de la structure, est rigidement maintenue sur cette dernière et subit donc une déformation lorsque la structure est déformée. La solution divulguée dans cette demande ne résout cependant pas la problématique de la mesure de température et de déformation d'une structure immergée dans un environnement aux contraintes fortes en termes de pression, de température et/ou d'espace disponible. US2012/300807 A1, WO2013/150019 A1 et FR2959309 A1 divulguent aussi des fibres optiques à réseau de Bragg pour mesurer simultanément la température et la déformation d'une structure.

Il existe donc un besoin pour améliorer les solutions de mesure de température et de déformation d'un crayon de combustible nucléaire au sein d'un environnement contraignant en termes de pression, de température et/ou d'espace disponible. De manière plus précise, l'invention vise à réaliser des cartographies spatiales de température et de déformation dans un milieu anisotrope tout en minimisant les dimensions du dispositif de mesure ainsi que les perturbations thermo-hydrauliques dues à sa présence.

Le but de l'invention est de répondre au moins en partie à ce besoin.

### Exposé de l'invention

Pour ce faire, l'invention concerne un crayon de combustible nucléaire comportant un dispositif de mesure optique selon la revendication 1.

Dans le cadre de l'invention, on entend par « environnement sévère » un environnement soumis à de fortes températures et/ou de fortes pressions, tel que rencontré particulièrement dans le cas d'une installation nucléaire, par exemple au sein d'une enceinte de refroidissement contenant des crayons de combustible. Un environnement sévère au sens de l'invention présente au moins l'une des conditions suivantes : une température minimale de 150 °C, une pression minimale de 10 bars.

Ainsi, l'invention consiste essentiellement en un support mécanique de fibres optiques à réseau de Bragg, pouvant être fixé sur une structure telle qu'une paroi de crayon de combustible nucléaire et comportant deux évidements. Le support est conçu de sorte à résister aux contraintes liées à l'environnement, afin de permettre la réalisation de mesures dans des environnements difficiles. Il est également conçu de sorte à accommoder les dilatations du crayon. Les matériaux du support de fibres sont sélectionnés de façon à ce que leurs propriétés, notamment en termes de dilatation thermique, soient aussi proches que possibles de celles de la paroi du crayon. Dans le cadre d'une application à un crayon de combustible nucléaire pour des réacteurs à eau pressurisée, le matériau usuellement utilisé est le Zircaloy. On veille également à ce que les fibres optiques aient une bonne tenue mécanique sous les flux neutronique et gamma auxquels elles sont soumises dans le cadre d'une application sur un crayon de combustible nucléaire.

Chaque évidement du support loge une fibre optique à réseau de Bragg : l'une est maintenue fixe, de sorte que sa déformation soit due à la déformation du support dans laquelle elle est maintenue ainsi qu'à la température, tandis que l'autre fibre a une extrémité laissée libre selon l'axe X du support, afin de permettre sa dilatation thermique sans contrainte mécanique. Ainsi, la première fibre optique peut être mise en œuvre, afin de mesurer à la fois les effets thermiques et la dilatation de la structure qui déforme le support et la seconde fibre optique peut être mise en œuvre, afin de mesurer uniquement un profil de température tout le long de la fibre. Il est ensuite possible de déduire à partir de ces mesures la dilatation de la structure, séparément des effets thermiques.

Autrement dit, afin de garantir un découplage des mesures de température et de dilatation et ainsi de permettre des mesures simultanées de température et de dilatation en continu tout du long de la structure, l'invention consiste à utiliser au moins deux fibres optiques à réseau de Bragg distinctes protégées de l'environnement au sein d'un support.

L'invention permet ainsi de s'affranchir des inconvénients majeurs des solutions selon l'état de l'art et en particulier d'accommoder au mieux les déformations de l'objet examiné, inhérentes au milieu dans lequel le dispositif selon l'invention est installé.

L'encombrement d'un dispositif de mesure selon l'invention est très largement réduit par rapport à un dispositif utilisant des thermocouples : les fibres optiques utilisées pour cette application ont classiquement un diamètre de l'ordre de 150 µm, le support peut donc avoir une épaisseur réduite par rapport aux contraintes rencontrées dans l'application principale visée par l'invention, i.e. un espace de l'ordre de quelques millimètres entre la gaine du crayon de combustible et la paroi interne de l'enceinte de refroidissement. Cet encombrement réduit signifie également que les perturbations hydrauliques dans le flux du liquide de refroidissement circulant autour du crayon de combustible sont minimisées.

De plus, l'invention permet d'obtenir un profil de température tout le long de la structure. La densité et le nombre des points de mesure avec un dispositif utilisant des thermocouples sont au contraire limités.

En outre, les signaux transmis par les fibres optiques sont insensibles aux perturbations électromagnétiques susceptibles de parasiter les signaux transmis par câble électrique. L'invention peut également être utilisée dans les environnements où les signaux électriques sont prohibés (notamment les zones dites ATEX).

De préférence, le support du dispositif est en contact direct avec la structure que l'on cherche à caractériser et l'évidement logeant la fibre optique dédiée à la mesure de température est localisé au plus près de la structure. En effet, ceci permet d'assurer une mesure la plus fidèle du flux thermique en provenance de la structure.

Avantageusement, le diamètre du premier évidement est supérieur d'au plus 5%, de préférence 1%, au diamètre de la première fibre optique à réseau de Bragg (c'est-à-dire la fibre fixée au sein du support), et le diamètre du deuxième évidement est supérieur d'au moins 5%, de préférence 10%, au diamètre de la deuxième fibre optique à réseau de Bragg (c'est-à-dire la fibre comportant une extrémité libre).

Il est en effet préférable que le diamètre de l'évidement soit proche du diamètre de la fibre optique dédiée à la mesure de la déformation, afin de minimiser l'espace libre au sein duquel la fibre pourrait se déformer. Comme la fibre est maintenue fixe à ses extrémités au sein de son évidement, sa dilatation thermique due à l'échauffement du crayon a tendance à provoquer une déformation latérale, ce qui perturberait la mesure de la dilatation de la structure.

Le diamètre de l'évidement de la deuxième fibre optique dédiée à la mesure de la température est, lui, de préférence suffisamment important pour ne pas empêcher la libre dilatation thermique de la fibre optique.

Avantageusement encore, le dispositif selon l'invention comporte une pluralité de première et deuxième fibres optiques à réseau de Bragg, le support comportant une pluralité de premier et deuxième évidements logeant chacun respectivement au moins en partie une première fibre optique à réseau de Bragg maintenue fixe, et au moins en partie une deuxième fibre optique à réseau de Bragg dont l'une des extrémités est laissé libre selon l'axe X.

En disposant chaque paire de fibres optiques à un emplacement différent autour de la structure à caractériser, il est en effet possible d'obtenir une meilleure caractérisation de la température et de la déformation de la structure. A cette fin, il est particulièrement avantageux que le support du dispositif adopte une forme de cage cylindrique. Cette forme permet de limiter l'impact du dispositif sur les contacts entre le fluide de refroidissement et la gaine du crayon de combustible tout en autorisant le placement d'une pluralité de paires de fibres optiques.

Le dispositif selon l'invention comporte de préférence quatre paires de première et de deuxième fibres optiques, le support comportant quatre paires de premier et de deuxième évidements, réparties équi-angulairement à 90° les unes des autres autour de l'axe X.

Afin de permettre la déformation du support du dispositif lorsque la structure que l'on cherche à caractériser se dilate, on prévoit avantageusement un système rigide d'allongement dont l'une des extrémités prend appui sur la structure et dont l'autre des extrémités prend appui sur le support. Ainsi, lorsque la structure se dilate, elle entraîne l'allongement du support par le biais de l'appui généré par le système d'allongement.

De préférence, la fixation des extrémités des fibres sur le support est obtenue au moyen d'organes de fixation, tels que des bagues de serrage, soudés sur le support.

L'invention a également pour objet, selon un autre de ses aspects, une utilisation du dispositif de mesure optique d'un crayon de combustible nucléaire décrit précédemment pour la mesure de cartographie de température et de dilatation longitudinale de la paroi externe du crayon de combustible nucléaire.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique en coupe selon l'axe longitudinal X d'un crayon de combustible nucléaire équipé d'un dispositif de mesure optique selon l'invention ;
- la figure 2 est une vue schématique en coupe transversale du crayon de combustible nucléaire tel que représenté en figure 1 ;
- la figure 3 représente une vue détaillée d'une partie de la figure 2 se focalisant sur une partie du dispositif selon l'invention.

Par souci de clarté, les mêmes éléments sont désignés par les mêmes références numériques dans les différentes figures.

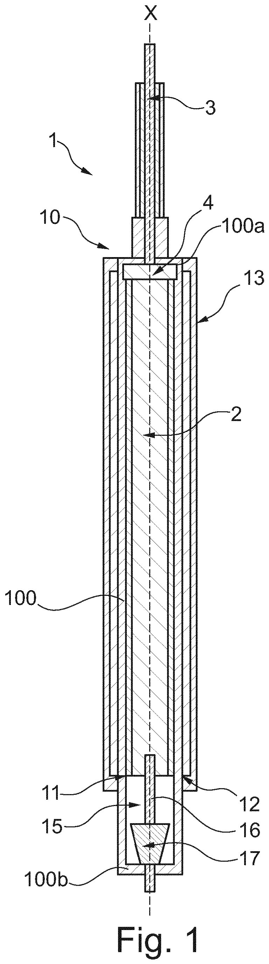

On a représenté en figure 1 un crayon de combustible nucléaire 1 d'axe longitudinal X équipé d'un dispositif de mesure optique 10 selon l'invention.

Le crayon 1 comprend une gaine 2 contenant des pastilles de combustible et une tige de support 3. Dans le mode de réalisation de la figure 1, le crayon comporte également une pièce d'arrêt 4 dont le rôle est celui d'une butée pour le dispositif de mesure optique 10.

Les inventeurs ont été confrontés à la problématique du suivi de la température et de la déformation d'un tel crayon dans le cadre de tests expérimentaux visant à caractériser le comportement du crayon lors d'essais en échauffement. Dans ce cadre, le crayon 1 est immergé dans un canal d'essai parcouru par un fluide de refroidissement.

Les conditions de fonctionnement du dispositif sont à ce titre particulièrement contraignantes : il peut ainsi s'agir des conditions de fonctionnement d'un réacteur à eau pressurisée, dans lequel le fluide de refroidissement est de l'eau pressurisée, typiquement à une pression de l'ordre de 155 bars et à une température de 320 °C, ou d'un réacteur à neutrons rapides, avec du sodium liquide pour fluide de refroidissement, ce dernier circulant typiquement sous une pression de 10 bars et à une température de 600 °C.

De plus, les contraintes géométriques sont également importantes puisque la distance entre la gaine du crayon de combustible et l'enceinte de circulation du fluide de refroidissement est typiquement de quelques millimètres.

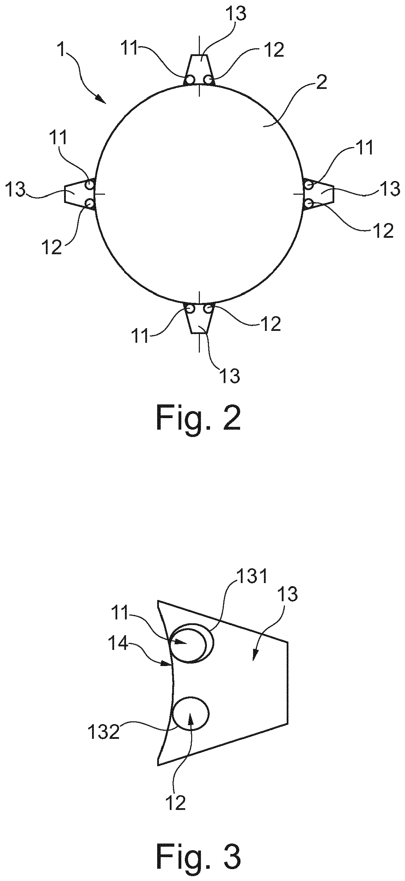

Le dispositif de mesure optique 10 est constitué dans l'exemple illustré par une cage cylindrique 100 comportant quatre barreaux 13 qui s'étendent parallèlement à l'axe X en étant disposés au contact de la gaine 2 du crayon. Plus précisément, dans l'exemple illustré en figure 2, les quatre barreaux 13 sont étant réparties équi-angulairement à 90° les uns des autres, autour de l'axe X.

Comme il apparaît clairement en figure 3, chaque barreau 1 comporte une surface intérieure de contact 14 qui épouse la forme extérieure de la gaine du crayon afin d'assurer un contact optimal.

La cage 100 comporte également une section supérieure 100a en butée contre la pièce d'arrêt 4 et entourant en partie la tige de support 3, ainsi qu'une section inférieure 100b qui comporte un système d'allongement 15 de la cage.

En effet, pour que la mesure en dilatation du crayon soit faisable, il est nécessaire que la fibre optique dédiée à cette fonction et donc également la cage à laquelle la fibre optique est fixée, soit étirée lors de la dilatation du crayon.

A cette fin, comme montré en figure 1, le système d'allongement 15 comporte une tige rigide 16 reliant l'extrémité distale du crayon et la section inférieure de la cage, ainsi qu'une pièce de contact 17 rigidement fixée à la tige 16 et en appui sur la section inférieure 100b de la cage.

Ainsi, lorsque le crayon 1 se dilate sous l'effet de son échauffement, ce dernier produit une poussée sur le système d'allongement 15 qui génère à son tour l'extension des barreaux 13 de la cage, puisque cette dernière est en butée d'un côté sur la pièce d'arrêt 4 solidaire du crayon et de l'autre sur l'extrémité distale du crayon par l'intermédiaire du système 15.

Comme visible en figure 2 et plus particulièrement en figure 3, chaque barreau 13 de la cage comporte deux évidements longitudinaux 131, 132 qui s'étendent parallèlement à l'axe X et dans chacun desquels est logée une fibre optique à réseau de Bragg 11 et 12. Ces évidements 131, 132 sont placés au plus proche de la gaine 2 du crayon, afin que les fibres optiques soient directement soumises à la température externe de la gaine.

L'évidement 131 qui loge la fibre optique 11, destinée à la mesure de la température, est d'un diamètre supérieur à celui de la fibre 11 qu'il contient : ainsi, la dilatation de la fibre dans le plan transversal n'est pas gênée par la paroi intérieure de l'évidement.

Au contraire, l'évidement 132 de la fibre optique 12, destinée à la mesure de la dilatation du crayon, a un diamètre proche de celui de la fibre qu'il loge. Il est en effet préférable de limiter toute dilatation thermique de cette fibre et toute déformation qui ne soit pas causée par l'allongement du crayon ou, ce qui revient au même, de la cage. Le fait de laisser un espace libre important autour de la fibre 12 introduirait un risque de déformation transversale de cette dernière.

Comme illustré en figure 1, la fibre 11 a une extrémité laissée libre selon l'axe X, c'est-à-dire sans butée mécanique: ainsi, lorsque cette fibre se dilate sous l'effet de l'échauffement du crayon, son allongement selon l'axe X n'est pas contraint. Dans le cas contraire, la mesure de température basée sur cette fibre serait faussée.

La fibre 12 est pour sa part maintenue fixement au sein de son évidement 132. Ses extrémités sont donc fixes. Ainsi, l'allongement du crayon 1 cause l'allongement de la cage 10, qui lui-même provoque l'allongement de la fibre 12. On obtient de cette manière un dispositif de mesure de la dilatation du crayon 1.

En effet, bien que la fibre 12 subisse à la fois un échauffement thermique et une dilatation, la connaissance des conditions thermiques mesurées par la fibre 11 permet de déduire les effets de la dilatation uniquement.

Dans le mode de réalisation illustré, les fibres optiques 11 et 12 sont agencées à l'intérieur du dispositif 10 tout le long de celui-ci et longent également la tige de support 3. Les fibres optiques 11, 12 sont reliées à un système d'acquisition de données non représenté.

A titre d'exemple, la source lumineuse utilisée dans le cadre de l'invention pour guider la lumière dans les fibres optiques 11, 12, peut avoir une longueur d'onde comprise entre 1000 et 1300 nanomètres et la précision des mesures effectuées est de l'ordre du picomètre.

Un crayon de combustible nucléaire dans un réacteur expérimental a typiquement une longueur de l'ordre de 600 millimètres. Dans des conditions usuelles d'échauffement, le crayon est susceptible de subir un allongement longitudinal de l'ordre de quelques millimètres ainsi qu'un gonflement pouvant atteindre quelques dixièmes de millimètres.

Ainsi, dans le cadre de l'invention, les inventeurs estiment que les effets liés à l'échauffement du crayon de combustible et à sa dilatation longitudinale sont précisément mesurables grâce à un dispositif selon l'invention.

Il est également envisageable d'effectuer à l'aide de l'invention des mesures de pression, bien que la précision de la mesure soit moindre dans ce cas.

Bien entendu, l'invention n'est pas limitée au mode de réalisation décrit et représenté, fourni à des fins illustratives uniquement. En particulier, le nombre de barreaux 13 et leur répartition angulaire ne sont pas limitatifs. Le système d'allongement 15 de la cage peut également être réalisé de différentes façons. Au lieu d'être disposé autour d'une structure comme décrit précédemment, le dispositif selon l'invention peut également être disposé à l'intérieur d'une structure. Par exemple, le dispositif selon l'invention pourrait être installé sur la paroi intérieure d'un tube.

## Revendications

1. Crayon de combustible nucléaire (1), comportant un dispositif de mesure optique (10) de température et de dilatation d'une structure (1, 2) en environnement sévère soumis à une température minimale de 150 °C et/ou une pression minimale de 10 bars, adapté pour mesurer la température et la dilatation longitudinale de la paroi du crayon de combustible nucléaire, le dispositif de mesure optique (10) comportant :
- un support (100) d'axe longitudinal X, adapté pour être fixé sur la structure, de manière à être déformé par la dilatation de la structure, et comportant au moins un premier (131) et au moins un deuxième évidement (132) s'étendant le long de l'axe X, le support étant conçu de sorte à résister aux contraintes liées à l'environnement ;
- une première fibre optique à réseau de Bragg (12), destinée à permettre une mesure de dilatation et une mesure de température, la première fibre optique à réseau de Bragg étant logée et fixée au moins en partie dans le premier évidement du support ;
- une deuxième fibre optique à réseau de Bragg (11), destinée à permettre une mesure de température, la deuxième fibre optique à réseau de Bragg étant logée au moins en partie dans le deuxième évidement du support, l'une des extrémités de la deuxième fibre optique à réseau de Bragg étant laissée libre selon l'axe X.

2. Crayon de combustible nucléaire selon la revendication 1, dans lequel :
- le diamètre du premier évidement est supérieur d'au plus 5%, de préférence 1%, au diamètre de la première fibre optique à réseau de Bragg, et
- le diamètre du deuxième évidement est supérieur d'au moins 5%, de préférence 10%, au diamètre de la deuxième fibre optique à réseau de Bragg.

3. Crayon de combustible nucléaire selon l'une des revendications précédentes, le dispositif de mesure optique comportant une pluralité de première et deuxième fibres optiques à réseau de Bragg, le support comportant une pluralité de premier et deuxième évidements logeant chacun respectivement au moins en partie une première fibre optique à réseau de Bragg maintenue fixe, et au moins en partie une deuxième fibre optique à réseau de Bragg dont l'une des extrémités est laissé libre selon l'axe X.

4. Crayon de combustible nucléaire selon la revendication 3, le dispositif de mesure optique comportant quatre paires de première et de deuxième fibres optiques, le support comportant quatre paires de premier et de deuxième évidements, réparties équi-angulairement à 90° les unes des autres autour de l'axe X.

5. Crayon de combustible nucléaire selon l'une des revendications précédentes, le dispositif de mesure optique comportant un système d'allongement (15) dont l'une des extrémités prend appui sur la structure et dont l'autre des extrémités prend appui sur le support, de sorte que la dilatation de la structure entraîne l'allongement du support par le biais de l'appui généré par le système d'allongement.

6. Utilisation du dispositif de mesure optique d'un crayon de combustible nucléaire selon l'une des revendications 1 à 5, pour la mesure de cartographie de température et de dilatation longitudinale de la paroi externe du crayon de combustible nucléaire.

## Patentansprüche

1. Kernbrennstab (1) mit einer optischen Messvorrichtung (10) zur Messung von Temperatur und Dehnung einer Struktur (1, 2) in rauer Umgebung, die einer Mindesttemperatur von 150 °C und/oder einem Mindestdruck von 10 bar ausgesetzt ist und zum Messen der Temperatur und der Längsausdehnung der Wand des Kernbrennstabs geeignet ist, wobei die optische Messvorrichtung (10) umfasst:
- einen Träger (100) mit der Längsachse X, der geeignet ist, an der Struktur so befestigt zu werden, dass er durch die Dehnung der Struktur verformt wird, und mindestens eine erste (131) und mindestens eine zweite (132) Ausnehmung umfasst, die sich entlang der Achse X erstrecken, wobei der Träger so konzipiert ist, dass er beständig gegen die mit der Umgebung verbundenen Beanspruchungen ist;
- eine erste optische Faser mit Bragg-Gitter (12), die dazu bestimmt ist, eine Dehnungsmessung und eine Temperaturmessung zu ermöglichen, wobei die erste optische Faser mit Bragg-Gitter zumindest teilweise in der ersten Ausnehmung des Trägers aufgenommen und befestigt ist;
- eine zweite optische Faser mit Bragg-Gitter (11), die dazu bestimmt ist, eine Temperaturmessung zu ermöglichen, wobei die zweite optische Faser mit Bragg-Gitter zumindest teilweise in der zweiten Ausnehmung des Trägers aufgenommen und befestigt ist, wobei eines der Enden der zweiten optischen Faser mit Bragg-Gitter entlang der Achse X frei gelassen wird.

2. Kernbrennstab nach Anspruch 1, bei dem:
- der Durchmesser der ersten Ausnehmung um höchstens 5 %, bevorzugt 1 %, größer als der Durchmesser der ersten optischen Faser mit Bragg-Gitter ist und
- der Durchmesser der zweiten Ausnehmung um mindestens 5 %, bevorzugt 10 %, größer als der Durchmesser der zweiten optischen Faser mit Bragg-Gitter ist.

3. Kernbrennstab nach einem der vorhergehenden Ansprüche, wobei die optische Messvorrichtung eine Mehrzahl von ersten und zweiten optischen Fasern mit Bragg-Gitter umfasst, wobei der Träger eine Mehrzahl von ersten und zweiten Ausnehmungen umfasst, die jeweils zumindest teilweise eine erste optische Faser mit Bragg-Gitter und zumindest teilweise eine zweite optische Faser mit Bragg-Gitter, deren eines Ende entlang der Achse X frei gelassen wird, aufnehmen.

4. Kernbrennstab nach Anspruch 3, wobei die optische Messvorrichtung vier Paare aus ersten und zweiten optischen Fasern umfasst, wobei der Träger vier Paare aus ersten und zweiten Ausnehmungen umfasst, die im gleichen Winkelabstand von 90° zueinander um die Achse X herum verteilt sind.

5. Kernbrennstab nach einem der vorhergehenden Ansprüche, wobei die optische Messvorrichtung ein Längungssystem (15) umfasst, dessen eines Ende sich an der Struktur abstützt und dessen anderes Ende sich am Träger abstützt, so dass die Dehnung der Struktur über die durch das Längungssystem bewirkte Abstützung zu einer Längung des Trägers führt.

6. Verwendung der optischen Messvorrichtung eines Kernbrennstabs nach einem der Ansprüche 1 bis 5 zur kartografischen Messung von Temperatur und Längsdehnung der Außenwand des Kernbrennstabs.

## Claims

1. Nuclear fuel rod (1), comprising an optical measurement device (10) for measuring the temperature and the expansion of a structure (1, 2) in a severe environment subjected to a minimum temperature of 150°C and/or a minimum pressure of 10 bar, suitable for measuring the temperature and the longitudinal expansion of the wall of the nuclear fuel rod, the optical measurement device (10) comprising:
- a support (100) of longitudinal axis X, suitable for being fixed onto the structure, so as to be deformed by the expansion of the structure, and comprising at least one first recess (131) and at least one second recess (132) extending along the axis X, the support being designed so as to withstand the stresses linked to the environment;
- a first fibre Bragg grating (12), intended to allow an expansion measurement and a temperature measurement, the first fibre Bragg grating being housed and fixed at least partly in the first recess of the support;
- a second fibre Bragg grating (11), intended to allow a temperature measurement, the second fibre Bragg grating being housed at least partly in the second recess of the support, one of the ends of the second fibre Bragg grating being left free along the axis X.

2. Nuclear fuel rod according to Claim 1, wherein:
- the diameter of the first recess is greater by at most 5%, preferably 1%, than the diameter of the first fibre Bragg grating, and
- the diameter of the second recess is greater by at least 5%, preferably 10%, than the diameter of the second fibre Bragg grating.

3. Nuclear fuel rod according to one of the preceding claims, the optical measurement device comprising a plurality of first and second fibre Bragg gratings the support comprising a plurality of first and second recesses each respectively housing, at least partly, a first fibre Bragg grating held fixed, and, at least partly, a second fibre Bragg grating of which one of the ends is left free along the axis X.

4. Nuclear fuel rod according to Claim 3, the optical measurement device comprising four pairs of first and second optical fibres, the support comprising four pairs of first and second recesses, distributed equiangularly at 90° from one another about the axis X.

5. Nuclear fuel rod according to one of the preceding claims, the optical measurement device comprising an elongation system (15) of which one of the ends bears on the structure and of which the other of the ends bears on the support, such that the expansion of the structure causes the elongation of the support through the bearing generated by the elongation system.

6. Use of the optical measurement device for a nuclear fuel rod according to one of Claims 1 to 5, for measurement mapping the temperature and the longitudinal expansion of the outer wall of the nuclear fuel rod.
